# EUROPÄISCHE PATENTSCHRIFT

(11) **EP 3 227 014 B1**
(45) Veröffentlichungstag und Bekanntmachung des Hinweises auf die Patenterteilung: **26.09.2018**
(21) Anmeldenummer: 15801756.6
(22) Anmeldetag: 25.11.2015
(51) Int. Cl.: B01J 2/26, B29C 33/58, B29C 41/02, B29C 41/38, B29C 41/42, B29C 41/52, B29B 9/10

(54) **VORRICHTUNG UND VERFAHREN ZUM PASTILLIEREN EINES FLIESSFÄHIGEN PRODUKTS**
DEVICE AND METHOD FOR PASTILLATING A FLOWABLE PRODUCT
DISPOSITIF ET PROCÉDÉ DE PASTILLAGE D'UN PRODUIT FLUIDE

(30) Priorität: 03.12.2014 DE 102014224736
(43) Veröffentlichungstag der Anmeldung: 11.10.2017
(73) Patentinhaber: IPCO Germany GmbH, 70736 Fellbach (DE)
(72) Erfinder: SCHMIDT, Bernd, 73240 Wendlingen (DE)
(74) Vertreter: Patentanwälte Ruff, Wilhelm, Beier, Dauster & Partner mbB
(86) Internationale Anmeldenummer: PCT/EP2015/077606
(87) Internationale Veröffentlichungsnummer: WO 2016/087276

(56) Entgegenhaltungen:
- EP-A1- 0 531 927
- EP-A1- 2 353 709
- DE-A1- 2 034 038
- DE-A1- 3 124 200
- DE-A1-102005 054 462
- DE-A1-102010 032 021
- US-A- 3 265 779

## Beschreibung

Die Erfindung betrifft eine Vorrichtung zum Pastillieren eines fließfähigen Produkts, insbesondere einer Schmelze, mit einem umlaufenden Band und einem Tropfenformer, wobei der Tropfenformer Produkttropfen auf einem Obertrum des Stahlbands ablegt, wobei die Produkttropfen im Laufe des Transports auf dem Obertrum des Bandes zu Pastillen verfestigen und wobei stromaufwärts des Bereichs, in dem die Produkttropfen auf dem Band abgelegt werden, Mittel zum Benetzen des Bandes mit einem flüssigen Trennmittel vorgesehen sind, wobei das Trennmittel das Anhaften der Produkttropfen am Band verhindert oder verringert. Die Erfindung betrifft auch ein Verfahren zum Pastillieren eines fließfähigen Produkts, wobei ein flüssiges Trennmittel zwischen einem Band und auf dem Band abgelegten Produkttropfen verwendet wird. Problematisch beim Anmischen von Trennmittel zur Verwendung zwischen einem Band und auf dem Band abgelegten Produkttropfen, beispielsweise Produkttropfen einer Schwefelschmelze, ist, dass sich das Trennmittel nach einiger Zeit wieder wenigstens teilweise entmischt. Wenn also innerhalb eines Tanks eine größere Menge an Trennmittel hergestellt wird, so kann sich die Konzentration des Trennmittels über der Zeit ändern. Abhilfe konnte hier nur dadurch geschaffen werden, dass das Trennmittel fortlaufend gerührt bzw. bewegt wird. Bei einem solchen Anmischen in Tanks hängt die korrekte Konzentration des Trennmittels ausschließlich von der Sorgfalt des Bedieners ab.

Die Druckschrift EP 2 353 709 A1 offenbart eine Vorrichtung und ein Verfahren zur Bandkonditionierung bei Pastillieranlagen, wobei ein zu pastillierendes fliessfähiges Produkt mit einem oberhalb eines Kühlbandes drehbar angeordneten gelochten Außenrohr tropfenförmig auf einer Oberseite eines unterhalb des Außenrohres angeordneten Kühlbands abgelegt wird und wobei nach der Verfestigung der Produkttropfen die entstandenen Pastillen wieder vom Kühlband abgehoben werden, wobei auf das Kühlband vor dem Ablegen der Produkttropfen ein Trennmittel mittels wenigstens einer Sprühdüse aufgesprüht wird. Hierbei kann eine ausreichend kleine Tropfengrösse und damit gründliche Zerstäubung erreicht werden, so dass das Kühlband gleichmässig mit Trennmittel versehen wird. Als Trennmittel kann eine wässrige Lösung einer oberflächenaktiven Substanz verwendet werden, die verhindert, dass die hergestellten Pastillen am Kühlband festkleben. Beispielsweise wird beim Pastillieren von Schwefel oder Harnstoff eine Produktschmelze vertropft und als Trennmittel wird eine wässrige oder wasserfreie Lösung oder eine wässrige oder wasserfreie Emulsion auf das Kühlband gesprüht, die dann verhindert, dass die Produktschmelze am Kühlband anhaftet. Die Trennmittelschicht befindet sich dann zwischen den abgelegten Produkttropfen und dem Kühlband und sorgt dafür, dass nach dem Verfestigen der Pastillen diese in einfacher Weise abgenommen werden können. Durch Aufsprühen des Trennmittels lässt sich eine gleichmässige Pastillenqualität erzielen, die sich unter anderem in einer einer Kugel angenäherten hohen Pastillenform zeigt, und die erzeugten Pastillen weisen auch eine höhere Bruchfestigkeit auf. Durch das Aufsprühen des Trennmittels wird auf dem Kühlband während des Produktionsbetriebes eine hydrophobe, also eine schmelzeabstossende Oberfläche erzeugt, auf der die aufgebrachten Produkttropfen nicht verlaufen und sich auch nicht mit der Oberfläche des Kühlbandes verbinden. Nach dieser Druckschrift kann das Trennmittel beispielsweise mittels wenigstens einer Zweistoffdüse aufgesprüht werden. Als Zweistoffdüsen werden Düsen bezeichnet, bei denen das zu versprühende Medium, beispielsweise ein flüssiges Trennmittel, mittels eines zweiten Mediums, üblicherweise Druckluft, zerstäubt wird. Zweistoffdüsen können bei hohen Durchsätzen eine sehr feine Zerstäubung im Sinne einer kleinen Tropfengrösse bei einer gleichmässigen Tropfenverteilung über den Sprühkegel erzielen. Allerdings fehlen in der EP 2 353 709 A1 Angaben darüber, wie das Trennmittel hergestellt bzw. bereitgestellt werden soll. Insbesondere wird dort nicht offenbart, dass das Trennmittel kontinuierlich mittels einer Proportionaldosierpumpe während des Betriebs der Vorrichtung aus wenigstens zwei flüssigen Bestandteilen angemischt wird.

Ergänzend wird noch auf die Offenbarung der DE 2034038 A1 verwiesen.

Mit der Erfindung soll eine Vorrichtung und ein Verfahren zum Pastillieren eines fließfähigen Produkts hinsichtlich der Herstellung eines zwischen Band und Produkttropfen verwendeten Trennmittels verbessert werden.

Erfindungsgemäß ist hierzu eine Vorrichtung gemäss Anspruch 1 zum Pastillieren eines fließfähigen Produkts, insbesondere einer Schmelze, mit einem umlaufenden Band und einem Tropfenformer vorgesehen, wobei der Tropfenformer Produkttropfen auf einem Obertrum des Stahlbands ablegt, wobei die Produkttropfen im Laufe des Transports auf dem Obertrum des Bandes zu Pastillen verfestigen und wobei stromaufwärts des Bereichs, in dem die Produkttropfen auf dem Band abgelegt werden, Mittel zum Benetzen des Bandes mit einem flüssigen Trennmittel vorgesehen sind, wobei das Trennmittel das Anhaften der Produkttropfen am Band verhindert oder verringert, bei der eine Proportionaldosierpumpe vorgesehen ist, um das Trennmittel kontinuierlich während des Betriebs der Vorrichtung aus wenigstens zwei flüssigen Bestandteilen anzumischen.

Indem das Trennmittel kontinuierlich während des Betriebs der Vorrichtung angemischt wird, ist die Verweildauer zwischen dem Anmischen und dem Verwenden des Trennmittels sehr gering. Dies bringt den erheblichen Vorteil mit sich, dass keine Gefahr besteht, dass sich die Bestandteile des Trennmittels während der Verweilzeit in einem Tank wieder trennen. Indem eine Proportionaldosierpumpe vorgesehen ist, um das Trennmittel kontinuierlich anzumischen, kann auch sichergestellt werden, dass die Konzentration bzw. Zusammensetzung des Trennmittels während des Betriebs der Vorrichtung konstant bleibt. Eine gewünschte Zusammensetzung bzw. Konzentration des Trennmittels kann dabei an der Proportionaldosierpumpe eingestellt werden. Die Zusammensetzung bzw. Konzentration des Trennmittels ist damit unabhängig von der Sorgfalt eines Bedieners. Da keine Tanks oder lediglich kleine Tanks zur Zwischenspeicherung erforderlich sind und insbesondere keine Rühreinrichtungen mehr benötigt werden, können der Platzbedarf und der Investitionsbedarf für die Vorrichtung zum Pastillieren verringert werden.

In Weiterbildung der Erfindung ist ein Zwischentank zum Zwischenspeichern des angemischten Trennmittels vor dem Auftragen auf das Band vorgesehen.

In Weiterbildung der Erfindung ist ein Fassungsvermögen des Zwischentanks kleiner ist als eine Menge an Trennmittel, die in vier Betriebsstunden der Vorrichtung benötigt wird.

Das Vorsehen eines kleinen Zwischentanks, der in jedem Fall kleiner ist als eine Menge an Trennmittel, die in vier Betriebsstunden der Vorrichtung benötigt wird, hat sich als vorteilhaft herausgestellt. Beispielsweise dann, wenn das Trennmittel aus Wasser und einem Trennmittelkonzentrat hergestellt wird, muss von Zeit zu Zeit der Konzentratbehälter gewechselt werden. Der Zwischentank hat dann vorteilhafterweise eine Größe, die lediglich den Zeitraum für das Wechseln des Konzentratbehälters überbrückt. Beispielsweise kann der Zwischentank auch so bemessen sein, dass die Proportionaldosierpumpe, Filter und dergleichen während des laufenden Betriebs der Vorrichtung zum Pastillieren gewartet, beispielsweise gereinigt werden können, da das Trennmittel während der Wartungszeit aus dem Zwischentank entnommen wird.

In Weiterbildung der Erfindung bilden die wenigstens zwei Bestandteile des Trennmittels im angemischten Zustand eine Dispersion.

Die erfindungsgemäße Vorrichtung ermöglicht es, Bestandteile des Trennmittels zu verwenden, die nicht ineinander lösbar sind und die lediglich zu einer Dispersion vermischt werden können. Da mit der erfindungsgemäßen Vorrichtung ein kontinuierliches Anmischen des Trennmittels erfolgt, besteht keine Gefahr, dass sich das Trennmittel vor dem Benetzen des umlaufenden Bandes wieder entmischt.

In Weiterbildung der Erfindung sind Mittel zum Temperieren wenigstens eines Bestandteils des Trennmittels vorgesehen.

Durch Vorsehen von Mitteln zum Temperieren kann beispielsweise eine temperaturabhängige Viskosität des Trennmittels bzw. eines Bestandteils des Trennmittels in einem gewünschten Bereich gehalten werden. Dadurch wird die Einhaltung eines exakten Mischungsverhältnisses deutlich erleichtert. Solche Mittel zum Temperieren sind insbesondere beim Anmischen von Trennmittel für die Pastillierung einer Schwefelschmelze von großem Vorteil.

In Weiterbildung der Erfindung sind die Proportionaldosierpumpe und ein Vorratsbehälter für einen Bestandteil des Trennmittels in einem gemeinsamen Gehäuse angeordnet, wobei Temperiermittel vorgesehen sind, um eine Temperatur innerhalb des Gehäuses in einem vordefinierten Bereich zu halten.

Durch Anordnung der Proportionaldosierpumpe und eines Vorratsbehälters für einen Bestandteil des Trennmittels in einem gemeinsamen Gehäuse kann die Temperierung in sehr einfacher und unproblematischer Weise durch Beheizen und/oder Kühlen des Gehäuseinneren erfolgen. Dies ist insbesondere bei aggressiven Trennmitteln vorteilhaft, da keine Heizeinrichtungen mit dem Trennmittel selbst in Kontakt kommen.

In Weiterbildung der Erfindung sind Mittel zum Überwachen eines Füllstands in einem Vorratsbehälter für einen ersten Bestandteil des Trennmittels vorgesehen.

In Weiterbildung der Erfindung sind Mittel zum Überwachen einer Strömung und/oder einer Strömungsmenge des ersten Bestandteils in einer Zuführleitung zur Proportionaldosierpumpe vorgesehen.

In Weiterbildung der Erfindung sind Mittel zum Überwachen eines Füllstands des Zwischentanks mit angemischtem Trennmittel vorgesehen.

Indem beispielsweise mehrere Füllstände sowie auch das Vorhandensein einer Strömung sowie eine Strömungsmenge überwacht werden und diese Daten in einer zentralen Steuerung zusammengeführt werden, kann sichergestellt werden, dass nicht unbeabsichtigt während des Betriebs der Vorrichtung kein Trennmittel oder Trennmittel mit einer falschen Konzentration bzw. Zusammensetzung vorhanden ist. Sollte tatsächlich kein Trennmittel oder Trennmittel einer fehlerhaften Zusammensetzung vorliegen, kann die Vorrichtung zur Pastillierung rasch abgeschaltet werden, um eine fehlerhafte Produktion von Pastillen zu verhindern.
In Weiterbildung der Erfindung ist die Proportionaldosierpumpe so ausgebildet, dass sie mittels des Flüssigkeitsdrucks eines Bestandteils des Trennmittels angetrieben wird.
Beispielsweise kann dann, wenn ein Bestandteil des Trennmittels Wasser ist, die Proportionaldosierpumpe mittels des Wasserdrucks angetrieben werden. Es ist somit außer dem Wasserdruck keinerlei Fremdkraft erforderlich, um das Trennmittel kontinuierlich anzumischen. Dies vereinfacht den konstruktiven Aufbau erheblich. Vorteilhafterweise wird das Wasser vor dem Zuführen zur Proportionaldosierpumpe gefiltert, um sicherzustellen, dass das fertig angemischte Trennmittel keine Partikel oder sonstige Verunreinigungen enthält.

Das der Erfindung zugrunde liegende Problem wird auch durch ein Verfahren gemäss Anspruch 11 zum Pastillieren eines fließfähigen Produkts gelöst, bei dem ein flüssiges Trennmittel zwischen einem Band und auf dem Band abgelegten Produkttropfen verwendet wird und bei dem das Herstellen des flüssigen Trennmittels durch kontinuierliches Vermischen von wenigstens zwei Bestandteilen des Trennmittels mit einer Proportionaldosierpumpe erfolgt, wobei eine Menge des der Proportionaldosierpumpe zugeführten ersten Bestandteils des Trennmittels in Abhängigkeit einer durch die Proportionaldosierpumpe hindurchgeförderten Menge des zweiten Bestandteils bemessen wird.
Neben den bereits im Zusammenhang mit der erfindungsgemäßen Vorrichtung geschilderten Vorteilen hat das erfindungsgemäße Verfahren und speziell die Verwendung einer Proportionaldosierpumpe weiter den Vorteil, dass die Konzentration bzw. Zusammensetzung des Trennmittels unabhängig ist von Schwankungen eines Versorgungsdrucks der Proportionaldosierpumpe. Wenn das Trennmittel beispielsweise aus einem Konzentrat und Wasser angemischt wird, sorgt die Proportionaldosierpumpe auch bei schwankendem Wasserdruck für eine konstante Zusammensetzung des Trennmittels.
In Weiterbildung der Erfindung ist das Überwachen und Einstellen einer Temperatur des ersten Bestandteils und/oder des zweiten Bestandteils des Trennmittels wenigstens im Bereich der Proportionaldosierpumpe vorgesehen.

In Weiterbildung der Erfindung ist das Heizen und/oder Kühlen des ersten Bestandteils des Trennmittels, des zweiten Bestandteils des Trennmittels und/oder der Proportionaldosierpumpe vorgesehen.

In Weiterbildung der Erfindung ist das Anordnen eines Vorratsbehälters für wenigstens einen Bestandteil des Trennmittels und der Proportionaldosierpumpe in einem gemeinsamen Gehäuse und das Überwachen und Einstellen einer Temperatur in dem Gehäuse vorgesehen.

Weitere Merkmale und Vorteile der Erfindung ergeben sich aus den Ansprüchen und der folgenden Beschreibung bevorzugter Ausführungsformen der Erfindung im Zusammenhang mit den Zeichnungen. Einzelmerkmale der unterschiedlichen Ausführungsformen in den unterschiedlichen Zeichnungen können dabei in beliebiger Weise miteinander kombiniert werden, ohne den Rahmen der Erfindung zu überschreiten. In den Zeichnungen zeigen:
- Fig. 1: eine erfindungsgemäße Vorrichtung zum Pastillieren eines fließfähigen Produkts in einer schematischen Seitenansicht und
- Fig. 2: eine schematische Darstellung der Vorrichtung zum Herstellen eines Trennmittels aus Fig. 1.

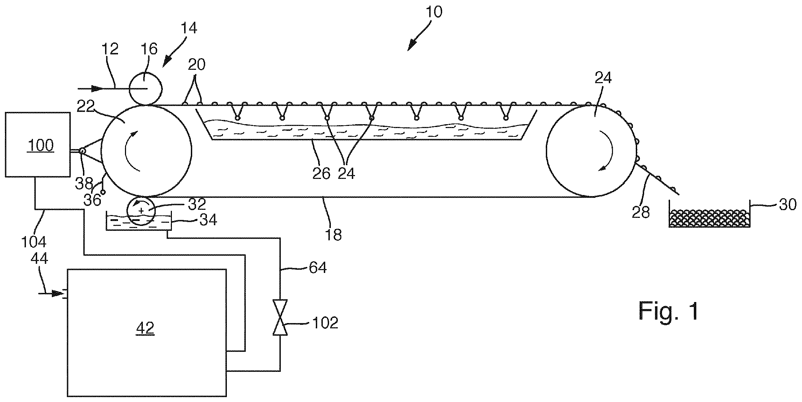

Fig. 1 zeigt schematisch und in einer Seitenansicht eine erfindungsgemäße Vorrichtung 10 zum Pastillieren eines fließfähigen Produkts, beispielsweise einer Schwefelschmelze. Die Schwefelschmelze wird über eine Leitung 12 einem Tropfenformer 14 zugeführt, der eine rotierende, gelochte Außentrommel 16 aufweist. Durch die rotierende, gelochte Außentrommel wird mittels einer innerhalb der Außentrommel angeordneten Düsenleiste die Schwefelschmelze hindurchgepresst. Die Außentrommel 16 ist oberhalb eines umlaufenden Bandes, insbesondere eines Stahlbandes 18, angeordnet und legt dadurch einzelne Produkttropfen 20 auf dem Obertrum dieses Stahlbandes ab. Das Stahlband 18 läuft um zwei Trommeln 22 und 24 um. In der Darstellung der Fig. 1 werden die vom Tropfenformer 14 auf dem Obertrum des Stahlbandes 18 abgelegten Produkttropfen 20 dadurch nach rechts bewegt. Das Stahlband 18 wird mittels Sprühdüsen 24 von unten her gekühlt, wobei die Kühlflüssigkeit von der Unterseite des Stahlbandes 18 in einen Auffangbehälter 26 abtropft und von dort wieder den Sprühdüsen 24 zugeführt werden kann. Im Laufe des Transports von der in Fig. 1 links angeordneten Umlenktrommel 22 zu der in Fig. 1 rechts angeordneten Umlenktrommel 24 verfestigen die Produkttropfen 20 zu Pastillen. Die verfestigten Pastillen werden dann mittels eines Abnahmemessers 28, das an dem Stahlband 18 im Bereich der Umlenkung mittels der Umlenktrommel 24 anliegt, im Bereich der rechten Umlenktrommel 24 abgenommen und gelangen dann in einen Auffangbehälter 30. Der Auffangbehälter 30 ist unterhalb des tiefer liegenden Endes des Abnahmemessers 28 angeordnet, so dass die Pastillen vom Abnahmemesser 28 in den Auffangbehälter 30 rutschen können.

Beim Abnehmen der Pastillen vom Stahlband 18 kann dann, wenn zwischen den Produkttropfen 20 und dem Stahlband 18 kein Trennmittel verwendet wird, das Anhaften der Pastillen am Stahlband so stark sein, dass die Pastillen wenigstens teilweise zerbrechen. Dies führt zu einer Staubbildung beim Abnehmen mittels des Abnahmemessers 28. Um ein solches starkes Anhaften der Produkttropfen 20 bzw. der verfestigten Pastillen auf dem Stahlband 18 zu verhindern oder zumindest zu verringern, wird das Stahlband 18 vor dem Ablegen der Produkttropfen 20 mit einem flüssigen Trennmittel benetzt. Ein solches flüssiges Trennmittel kann beispielsweise mit einer Walze 32 auf das Band 18 aufgetragen werden, die einerseits das umlaufende Stahlband 18 kontaktiert und auf diesem abrollt und andererseits mit einem Teil ihres Umfangs in einen Behälter 34, der das flüssige Trennmittel enthält, eingetaucht ist. Eine gleichmäßige Schichtdicke des Trennmittels kann dann durch wenigstens einen Abzieher 36 sichergestellt werden, der stromabwärts der Auftragswalze 32 angeordnet ist.

Die Walze 32 ist unterhalb der in Fig. 1 linken Umlenktrommel 22 angeordnet. Unterhalb der Walze 32 ist der Behälter 34 platziert. Der Abzieher 36 ist stromabwärts der Walze 32 angeordnet und kontaktiert das Stahlband 18 in einem Bereich, in dem es auf der Umlenktrommel 22 aufliegt.

Der Behälter 34, der mit dem flüssigen Trennmittel gefüllt ist und in den die Walze 32 abschnittsweise eintaucht, wird über eine Leitung 64 von einer Vorrichtung 42 mit fertig angemischtem, flüssigen Trennmittel versorgt. in der Leitung 64 ist ein Ventil 102 angeordnet, mit dem die Leitung 64 abgesperrt werden kann. Dadurch kann verhindert werden, dass unbeabsichtigt Trennmittel in den Behälter 34 einläuft.

Alternativ oder zusätzlich kann das Trennmittel auch mittels Sprühdüsen 38 aufgetragen werden, die in der Darstellung der Fig. 1 das Stahlband 18 in dem Bereich benetzen, in dem es auf der linken Umlenktrommel 22 aufliegt. Nach dem Aufsprühen des Trennmittels mittels der Sprühdüsen 38 legt der Bereich des Stahlbands 18 mit dem aufgesprühten Trennmittel noch einen Weg zurück, der etwa einem Viertel des Umfangs der linken Umlenktrommel 22 entspricht. Während der dadurch verursachten Verweilzeit auf dem Stahlband 18 kann das Trennmittel noch auf dem Stahlband 18 verlaufen und eine gleichmäßige, dünne Schicht bilden, auf die dann die Produkttropfen 20 mittels des Tropfenformers 14 abgelegt werden. Bei geeigneter Einstellung der Sprühdüsen 38 ist die vom Stahlband 18 abtropfende Menge an flüssigem Trennmittel minimal.

Die Sprühdüsen 38 werden über eine pneumatische Sprüheinrichtung 100 mit dem flüssigen Trennmittel und Druckluft versorgt und können somit als Zweistoffsprühdüsen aufgebaut sein, um eine sehr feine Zerstäubung des Trennmittels zu erzielen. Die pneumatische Sprüheinrichtung 100 wird mittels einer Leitung 104 von der Vorrichtung 42 mit fertig angemischtem Trennmittel versorgt.

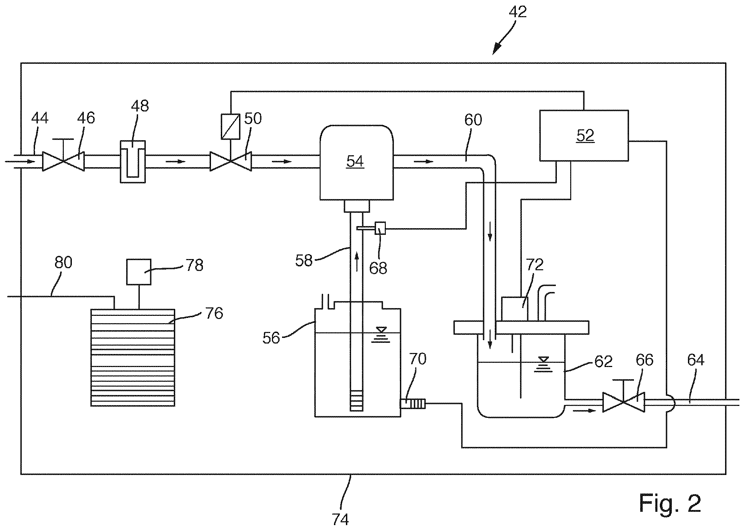

Das flüssige Trennmittel wird aus wenigstens zwei Bestandteilen mittels der in Fig. 1 lediglich schematisch dargestellten Vorrichtung 42 kontinuierlich während des Betriebs der Vorrichtung 10 hergestellt. Ein Bestandteil des Trennmittels ist dabei Wasser, das der Vorrichtung 42 gemäß einem Pfeil 44 aus einer konventionellen Wasserleitung zugeführt wird. Die Vorrichtung 42 arbeitet mit einer Proportionaldosierpumpe, und der Aufbau der Vorrichtung 42 wird anhand der Fig. 2 detailliert erläutert.

Die Vorrichtung der Fig. 2 zeigt eine schematische Ansicht der Vorrichtung 42 zum Herstellen eines Trennmittels. Wie bereits ausgeführt wurde, ist die Vorrichtung 42 an eine Wasserleitung angeschlossen und, wie durch den Pfeil 44 angedeutet ist, wird Wasser zugeführt. Das Wasser strömt durch ein konventionelles Absperrventil 46 sowie über einen Filter 48 und über ein Magnetventil 50, das mittels einer zentralen Steuereinheit 52 der Vorrichtung 42 angesteuert werden kann. Stromabwärts des Magnetventils 50 ist eine Proportionaldosierpumpe 54 vorgesehen. Die Proportionaldosierpumpe 54 arbeitet beispielsweise nach dem Prinzip einer Wasserstrahlpumpe und wird durch den Druck des zugeführten Wassers angetrieben. Mittels der Proportionaldosierpumpe 54 wird ein zweiter Bestandteil des Trennmittels, ein Konzentrat, aus einem Vorratstank 56 über eine Leitung 58 angesaugt. Ein Mischungsverhältnis zwischen dem Wasser und dem Konzentrat aus dem Tank 56 kann dabei an der Proportionaldosierpumpe 54 eingestellt werden. Stromabwärts der Proportionaldosierpumpe 54 liegt in einer Leitung 60 dann das fertig angemischte Trennmittel in der gewünschten Konzentration bzw. in der gewünschten Zusammensetzung vor. Die Leitung 60 führt zu einem Zwischentank 62, in dem das fertig angemischte Trennmittel zwischengespeichert wird. Ausgehend von dem Zwischentank 62 wird das Trennmittel dann über eine Leitung 64 den Sprühdüsen 38 oder dem Behälter 34 zugeführt, siehe Fig. 1. Die Leitung 64 kann mittels eines Absperrventils 66 abgesperrt und freigegeben werden.

Der Zwischentank 62 weist dabei ein Fassungsvermögen auf, das vergleichsweise klein ist und in jedem Fall kleiner ist als eine Menge an Trennmittel, die in vier Betriebsstunden der Vorrichtung 10 benötigt wird. Der Zwischentank 62 dient unter anderem dazu, einen Zeitraum zu überbrücken, in dem beispielsweise der Behälter 56 mit dem Konzentrat des Trennmittels aufgefüllt oder gewechselt wird oder beispielsweise, um einen Zeitraum zu überbrücken, in dem der Filter 48 gereinigt und/oder weitere Bestandteile der Vorrichtung 42 gewartet werden. Hauptsächlich aber dient der Zwischentank 62 als Puffer, wenn mehrere Vorrichtungen 10, also Stahlbandkühler zu- oder abgeschaltet werden. Der Zwischentank 62 hat beispielsweise ein Volumen zwischen 6 Litern und 7 Litern. Der Tank 56 für das Konzentrat hat beispielsweise ein Volumen von 40 Litern.

Um sicherzustellen, dass in der Leitung 64 während des Betriebs der Vorrichtung 10, siehe Fig. 1, stets Trennmittel in der gewünschten Zusammensetzung zur Verfügung steht, überwacht die zentrale Steuerung 52 mittels eines Sensors 68, der in der Leitung 58 zwischen dem Behälter 56 und der Proportionaldosierpumpe angeordnet ist, das Vorhandensein einer Strömung sowie eine Strömungsmenge in der Zuführleitung 58 vom Behälter 56 zur Proportionaldosierpumpe 54. Ein weiterer kapazitiver Sensor 70, der unmittelbar oberhalb eines Bodens des Behälters 56 angeordnet ist, erfasst durch die Wandung des Tanks 56 hindurch dessen Füllstand und gibt ein Signal an die zentrale Steuerung 52 aus, wenn ein Füllstand im Behälter 56 unterhalb eines vordefinierten Werts liegt, wenn also der Behälter 56 nachgefüllt werden muss. Darüber hinaus überwacht die zentrale Steuerung 52 mittels zweier Füllstandsensoren 72 den Füllstand des Zwischentanks 62 und steuert das Zulaufventil 50 für das Nachfüllen des Zwischentanks 62. Die Füllstandsensoren 72 sind im Zwischentank 62 auf Höhe eines Maximalpegels beziehungsweise auf Höhe eines Minimalpegels angeordnet. Der Maximalpegel ist durch die Anordnung eines ersten der Sensoren 72 so bemessen, dass der Zwischentank 62 nicht überläuft. Der Minimalpegel ist durch die Anordnung eines zweiten der Sensoren so bemessen, dass er kurz oberhalb des Bodens des Zwischentanks 62 angeordnet ist. Mittels des zweiten Sensors 72 wird sichergestellt, dass die Leitung 64 nicht trockenfällt.

Erkennt die zentrale Steuerung 52 beispielsweise mittels des Sensors 70, dass der Behälter 56 fast leer ist und aufgefüllt werden muss, so gibt die zentrale Steuerung 52 ein Signal aus, dass der Behälter 56 nachgefüllt werden muss. Erfolgt dieser Nachfüllvorgang nicht innerhalb eines vordefinierten Zeitraums, insbesondere von einer Stunde, ab der Signalgabe, so stoppt die zentrale Steuerung 52 die Vorrichtung zum Pastillieren 10. Damit wird eine weitere Entnahme von Trennmittel mittels der Sprüheinrichtung 100 und den Sprühdüsen 38 verhindert. Durch das Stoppen der Vorrichtung zum Pastillieren 10 kann gewährleistet werden, dass immer Trennmittel aufgebracht wird und der Zwischentank 62 stets mit fertig angemischtem Trennmittel gefüllt ist. Nach dem Wiederbefüllen des Behälters 56 erkennt die zentrale Steuerung 52 über den Sensor 70 den nun ausreichenden Füllstand und gibt damit die Freigabe für einen Neustart der Vorrichtung zum Pastillieren 10.

Während des vordefinierten Zeitraums, insbesondere von einer Stunde, ab Signalgabe wird die Vorrichtung 10 währenddessen aus dem Zwischentank 62 mit fertig angemischtem Trennmittel versorgt. Nachdem der Behälter 56 nachgefüllt ist, erkennt dies die zentrale Steuerung 52 über das Signal des Sensors 70.

Die Proportionaldosierpumpe 54 wird mittels des Wasserdrucks angetrieben, benötigt also selbst keinen irgendwie gearteten motorischen Antrieb.

Die Vorrichtung 42 zum kontinuierlichen Herstellen des Trennmittels ist innerhalb eines Gehäuses 74, beispielsweise eines Schranks, angeordnet. In dem Gehäuse 74 sind Temperiermittel in Form einer Heizung 76 und eines Thermostats 78 vorgesehen. Die Heizung 76 wird über eine Leitung 80 mit elektrischer Energie versorgt. Der Thermostat 78 erfasst eine Temperatur in dem Gehäuse 74 und steuert dementsprechend die Heizung 76 an. Innerhalb des Gehäuses 74 kann dadurch eine gleichbleibende Temperatur gewährleistet werden. Dies ist insbesondere deshalb vorteilhaft, da beispielsweise das zum Pastillieren einer Schwefelschmelze verwendete Trennmittel eine Abhängigkeit seiner Viskosität von der Temperatur zeigt. Indem innerhalb des Gehäuses 74 somit eine gleichbleibend konstante Temperatur herrscht, werden auch die Proportionaldosierpumpe 54 sowie der Behälter 56 mit dem darin enthaltenen Konzentrat des Trennmittel temperiert. Ein Mischungsverhältnis in der Proportionaldosierpumpe 54 kann dadurch in einem äußerst kleinen Toleranzbereich gehalten werden.

Bei der dargestellten Ausführungsform ist der Thermostat 78 nicht mit der zentralen Steuerung 52 verbunden. Im Rahmen der Erfindung kann aber durchaus vorgesehen sein, dass die zentrale Steuerung 52 die Temperatur innerhalb des Gehäuses 74 mittels des Thermostats 78 überwacht und beispielsweise bei einem Ausfall der Heizung 76 die Vorrichtung zum Pastillieren 10 stoppt, um das Besprühen des Bandes 18 mit falsch angemischtem Trennmittel zu verhindern.

## Patentansprüche

1. Vorrichtung zum Pastillieren eines fließfähigen Produkts, insbesondere einer Schmelze, mit einem umlaufenden Band (18) und einem Tropfenformer (14), wobei der Tropfenformer (14) Produkttropfen (20) auf einem Obertrum des Bands (18) ablegt, wobei die Produkttropfen (20) im Laufe des Transports auf dem Obertrum des Bandes (18) zu Pastillen verfestigen und wobei stromaufwärts des Bereichs, in dem die Produkttropfen (20) auf dem Band (18) abgelegt werden, Mittel (32, 38) zum Benetzen des Bandes (18) mit einem flüssigen Trennmittel vorgesehen sind, wobei das Trennmittel das Anhaften der Produkttropfen (20) am Band (18) verhindert oder verringert, **dadurch gekennzeichnet, dass** eine Proportionaldosierpumpe (54) vorgesehen ist, um das Trennmittel kontinuierlich während des Betriebs der Vorrichtung (10) aus wenigstens zwei flüssigen Bestandteilen anzumischen.

2. Vorrichtung nach Anspruch 1, **gekennzeichnet durch** einen Zwischentank (62) zum Zwischenspeichern des angemischten Trennmittels vor dem Auftragen auf das Band (18).

3. Vorrichtung an Anspruch 2, **dadurch gekennzeichnet, dass** ein Fassungsvermögen des Zwischentanks (62) kleiner ist als eine Menge an Trennmittel, die in vier Betriebsstunden der Vorrichtung (10) benötigt wird.

4. Vorrichtung nach wenigstens einem der vorstehenden Ansprüche, **dadurch gekennzeichnet, dass** die wenigstens zwei Bestandteile des Trennmittels im angemischten Zustand eine Dispersion bilden.

5. Vorrichtung nach wenigstens einem der vorstehenden Ansprüche, **dadurch gekennzeichnet, dass** Mittel zum Temperieren wenigstens eines Bestandteils des Trennmittels vorgesehen sind.

6. Vorrichtung nach Anspruch 5, **dadurch gekennzeichnet, dass** die Proportionaldosierpumpe (54) und ein Vorratsbehälter (56) für einen Bestandteil des Trennmittels in einem gemeinsamen Gehäuse (74) angeordnet sind, wobei Temperiermittel (76) vorgesehen sind, um eine Temperatur innerhalb des Gehäuses (74) in einem vordefinierten Bereich zu halten.

7. Vorrichtung nach einem der vorstehenden Ansprüche, **gekennzeichnet durch** Mittel (70) zum Überwachen eines Füllstands in einem Vorratsbehälter (56) für einen ersten Bestandteil des Trennmittels.

8. Vorrichtung nach einem der vorstehenden Ansprüche, **gekennzeichnet durch** Mittel (70) zum Überwachen einer Strömung und/oder einer Strömungsmenge des ersten Bestandteils in einer Zuführleitung (58) zur Proportionaldosierpumpe (54).

9. Vorrichtung nach wenigstens einem der vorstehenden Ansprüche, **gekennzeichnet durch** Mittel (72) zum Überwachen eines Füllstands des Zwischentanks (62) mit angemischtem Trennmittel.

10. Vorrichtung nach wenigstens einem der vorstehenden Ansprüche, **dadurch gekennzeichnet, dass** die Proportionaldosierpumpe (54) so ausgebildet ist, dass sie mittels des Flüssigkeitsdrucks eines Bestandteils des Trennmittels angetrieben wird.

11. Verfahren zum Pastillieren eines fließfähigen Produkts unter Verwendung der Vorrichtung nach einem der vorstehenden Ansprüche, wobei ein flüssiges Trennmittel zwischen einem Band und auf dem Band abgelegten Produkttropfen verwendet wird, **gekennzeichnet durch** Herstellen des flüssigen Trennmittels mittels kontinuierlichem Vermischen von wenigstens zwei Bestandteilen des Trennmittels mit einer Proportionaldosierpumpe (54), wobei eine Menge des der Proportionaldosierpumpe (54) zugeführten ersten Bestandteils des Trennmittels in Abhängigkeit einer durch die Proportionaldosierpumpe (54) hindurchgeförderten Menge des zweiten Bestandteils bemessen wird.

12. Verfahren nach Anspruch 11, **gekennzeichnet durch** Überwachen und Einstellen einer Temperatur des ersten Bestandteils und/oder des zweiten Bestandteils des Trennmittels wenigstens im Bereich der Proportionaldosierpumpe (54).

13. Verfahren nach Anspruch 12, **gekennzeichnet durch** Heizen und/oder Kühlen des ersten Bestandteils des Trennmittels, des zweiten Bestandteils des Trennmittels und/oder der Proportionaldosierpumpe (54).

14. Verfahren nach Anspruch 13, **gekennzeichnet durch** Anordnen eines Vorratsbehälters (56) für wenigstens einen Bestandteil des Trennmittels und der Proportionaldosierpumpe (54) in einem gemeinsamen Gehäuse (74) und Überwachen und Einstellen einer Temperatur in dem Gehäuse (74).

## Claims

1. Device for pastillating a flowable product, in particular a melt, said device having a revolving belt (18) and a drop former (14), wherein the drop former (14) deposits product drops (20) on an upper run of the belt (18), wherein the product drops (20) in the course of transportation on the upper run of the belt (18) solidify to form pastilles, and wherein means (32, 38) for wetting the belt (18) with a liquid release agent are provided upstream of that region in which the product drops (20) are deposited on the belt (18), wherein the release agent prevents or reduces the adhesion of the product drops (20) to the belt (18), **characterized in that** a proportional metering pump (54) is provided for continuously mixing the release agent from at least two liquid components during the operation of the device (10).

2. Device according to claim 1, **characterized by** an intermediate tank (62) for intermediately storing the mixed release agent prior to the application to the belt (18).

3. Device according to claim 2, characterized that a holding capacity of the intermediate tank (62) is smaller than a quantity of release agent that is required in four operating hours of the device (10).

4. Device according to at least one of the preceding claims, **characterized in that** the at least two components of the release agent in the mixed state form a dispersion.

5. Device according to at least one of the preceding claims, **characterized in that** means for temperature controlling at least one component of the release agent are provided.

6. Device according to claim 5, **characterized in that** the proportional metering pump (54) and a storage container (56) for a component of the release agent are disposed in a common housing (74), wherein temperature control means (76) for maintaining a temperature within the housing (74) in a predefined range are provided.

7. Device according to any of the preceding claims, **characterized by** means (70) for monitoring a filling level in a storage container (56) for a first component of the release agent.

8. Device according to any of the preceding claims, **characterized by** means (70) for monitoring a flow and/or a flow quantity of the first component in a supply line (58) to the proportional metering pump (54).

9. Device according to at least one of the preceding claims, **characterized by** means (72) for monitoring a filling level of the intermediate tank (62) having a mixed release agent.

10. Device according to at least one of the preceding claims, **characterized in that** the proportional metering pump (54) is configured such that the latter is driven by means of the fluid pressure of a component of the release agent.

11. Method for pastillating a flowable product using the device according to any of the preceding claims, wherein a liquid release agent is used between a belt and product drops that are deposited on the belt, **characterized by** producing the liquid release agent by means of continuously mixing at least two components of the release agent by way of a proportional metering pump (54), wherein a quantity of the first component of the release agent that is supplied to the proportional metering pump (54) is determined so as to depend on a quantity of the second component that is conveyed through the proportional metering pump (54).

12. The method according to claim 11, **characterized by** monitoring and setting a temperature of the first component and/or of the second component of the release agent at least in the region of the proportional metering pump (54).

13. The method according to claim 12, **characterized by** heating and/or cooling of the first component of the release agent, of the second component of the release agent, and/or of the proportional metering pump (54).

14. The method according to claim 13, **characterized by** disposing a storage container (56) for at least one component of the release agent and of the proportional metering pump (54) in a common housing (74), and monitoring and setting a temperature in the housing (74).

## Revendications

1. Dispositif de pastillage d'un produit fluide, en particulier d'une masse fondue, avec une bande défilante (18) et un formateur de gouttes (14), dans lequel le formateur de gouttes (14) dépose des gouttes de produit (20) sur un brin supérieur de la bande (18), dans lequel les gouttes de produit (20) se solidifient en pastilles au cours du transport sur le brin supérieur de la bande (18) et dans lequel il est prévu, en amont de la zone dans laquelle les gouttes de produit (20) sont déposées sur la bande (18), des moyens (32, 38) pour mouiller la bande (18) avec un agent de séparation liquide, dans lequel l'agent de séparation empêche ou réduit l'adhérence des gouttes de produit (20) sur la bande (18), **caractérisé en ce qu'**il est prévu une pompe de dosage proportionnelle (54), pour mélanger de façon continue l'agent de séparation à partir d'au moins deux composants liquides pendant le fonctionnement du dispositif (10).

2. Dispositif selon la revendication 1, **caractérisé par** un réservoir intermédiaire (62) pour stocker provisoirement l'agent de séparation mélangé avant le dépôt sur la bande (18).

3. Dispositif selon la revendication 2, **caractérisé en ce qu'**une capacité du réservoir intermédiaire (62) est inférieure à une quantité d'agent de séparation, qui est nécessaire pour quatre heures de fonctionnement du dispositif (10).

4. Dispositif selon au moins une des revendications précédentes, **caractérisé en ce que** lesdits au moins deux composants de l'agent de séparation forment dans l'état mélangé une dispersion.

5. Dispositif selon au moins une des revendications précédentes, **caractérisé en ce qu'**il est prévu des moyens pour équilibrer la température d'au moins un composant de l'agent de séparation.

6. Dispositif selon la revendication 5, **caractérisé en ce que** la pompe de dosage proportionnelle (54) et un réservoir de stockage (56) pour un composant de l'agent de séparation sont disposés dans un boîtier commun (74), dans lequel il est prévu des moyens pour équilibrer la température (76) afin de maintenir une température à l'intérieur du boîtier (74) dans une plage prédéfinie.

7. Dispositif selon l'une quelconque des revendications précédentes, **caractérisé par** des moyens (70) pour surveiller un niveau de remplissage dans un réservoir de stockage (56) pour un premier composant de l'agent de séparation.

8. Dispositif selon l'une quelconque des revendications précédentes, **caractérisé par** des moyens (70) pour surveiller un écoulement et/ou un débit d'écoulement du premier composant dans une conduite d'alimentation (58) vers la pompe de dosage proportionnelle (54).

9. Dispositif selon au moins une des revendications précédentes, **caractérisé par** des moyens (72) pour surveiller un niveau de remplissage du réservoir intermédiaire (62) avec l'agent de séparation mélangé.

10. Dispositif selon au moins une des revendications précédentes, **caractérisé en ce que** la pompe de dosage proportionnelle (54) est conçue de telle manière qu'elle soit entraînée par la pression de liquide d'un composant de l'agent de séparation.

11. Procédé de pastillage d'un produit fluide avec utilisation du dispositif selon l'une quelconque des revendications précédentes, dans lequel on utilise un agent de séparation liquide entre une bande et des gouttes de produit déposées sur la bande, **caractérisé en ce que** l'on prépare l'agent de séparation liquide au moyen du mélange continu d'au moins deux composants de l'agent de séparation avec une pompe de dosage proportionnelle (54), dans lequel on mesure une quantité du premier composant de l'agent de séparation fourni à la pompe de dosage proportionnelle (54) en fonction d'une quantité du deuxième composant transporté à travers la pompe de dosage proportionnelle (54).

12. Procédé selon la revendication 11, **caractérisé en ce que** l'on surveille et on règle une température du premier composant et/ou du deuxième composant de l'agent de séparation au moins dans la région de la pompe de dosage proportionnelle (54).

13. Procédé selon la revendication 12, **caractérisé en ce que** l'on chauffe et/ou on refroidit le premier composant de l'agent de séparation, le deuxième composant de l'agent de séparation et/ou la pompe de dosage proportionnelle (54).

14. Procédé selon la revendication 13, **caractérisé en ce que** l'on dispose un réservoir de stockage (56) pour au moins un composant de l'agent de séparation et la pompe de dosage proportionnelle (54) dans un boîtier commun (74) et on surveille et on règle une température dans le boîtier (74).
